# EUROPEAN PATENT APPLICATION

(11) **EP 4 745 856 A1**
(43) Date of publication of application: **20.05.2026**
(21) Application number: 24876233.8
(22) Date of filing: 13.08.2024
(51) Int. Cl.: G06Q 10/0633, G06Q 10/0639, G06Q 50/04, H01M 10/04, H01M 50/204

(54) **BATTERY MODULE ASSEMBLY METHOD AND BATTERY MODULE ASSEMBLY SYSTEM**

(30) Priority: 08.10.2023 CN 202311288359
(71) Applicant: Contemporary Amperex Technology Co., Limited, Ningde, Fujian 352100 (CN)
(72) Inventor: WU, Kai, Ningde, Fujian 352100 (CN); LUO, Jian, Ningde, Fujian 352100 (CN); LIAO, Shunlin, Ningde, Fujian 352100 (CN); WU, Ying, Ningde, Fujian 352100 (CN)
(74) Representative: Ran, Handong
(86) International application number: PCT/CN2024/111755
(87) International publication number: WO 2025/077413

(57) **Abstract**

Disclosed in embodiments of the present disclosure are a battery module assembly method and a battery module assembly system. The battery module assembly method comprises: throughout an entire assembly process, i.e., from feeding of at least one battery cell to assembly into a battery module, inspecting the at least one battery cell multiple times on the basis of data to be inspected sent by a battery module assembly device; and sending at least one of multiple inspection results to the battery module assembly device, so as to implement entire-process management of battery module assembly.

## Description

### CROSS-REFERENCE TO RELATED APPLICATION

The present invention is presented based on Chinese Patent Application No. 202311288359.9 filed on October 8, 2023 and entitled "BATTERY MODULE ASSEMBLY METHOD AND BATTERY MODULE ASSEMBLY SYSTEM", and claims the priority to the Chinese Patent Application, the content of which is incorporated herein by reference in its entirety.

### TECHNICAL FIELD

The present invention relates to the technical field of battery manufacturing, and in particular, to a battery module assembly method and a battery module assembly system.

### BACKGROUND

During the process of assembling battery cells into a battery module, after the battery cells enter a production line, the battery cells on the production line are inspected to ensure the matching between the battery cells and the battery module. However, under such a verification method, a problem that the battery cells do not match the battery module still exists.

### SUMMARY

In order to solve the above technical problem, embodiments of the present invention are intended to provide a battery module assembly method and a battery module assembly system, which can achieve full-process management of battery module assembly and solve the problem of mismatch between the batteries and the battery module in the related art.

The technical solutions of the present invention are implemented as follows.

Provided is a battery module assembly method applied to a control device. The battery module assembly method includes: during an entire assembly process of at least one battery cell from incoming to assembly into a battery module, performing a plurality of inspections on the at least one battery cell based on data to be inspected transmitted by a battery module assembly device; and transmitting at least one of results of the plurality of inspections to the battery module assembly device to achieve full-process management of battery module assembly.

It can be understood that, during the entire assembly process of the battery module, real-time collection of battery data of multiple stages is performed through the battery module equipment device to obtain data to be inspected of multiple stages; and a plurality of inspections are performed on the battery cell by the control device based on the data to be inspected of multiple stages. Therefore, anomalies in the battery module assembly process can be promptly addressed based on the results of the plurality of inspections, thereby achieving full-process management of battery module assembly. Furthermore, since a plurality of inspections are performed throughout the entire process of battery module assembly, an effective closed loop of data for the entire assembly process of the battery module can be achieved, enabling effective management and control of data of the entire assembly process of the battery module, and solving the problem of mismatch between the battery cells and the battery module caused by anomalies such as battery cell damage, manual intervention, complicated assembly operations, and equipment failures.

In the above solution, during the entire assembly process of at least one battery cell from incoming to assembly into a battery module, performing the plurality of inspections on the at least one battery cell based on data to be inspected transmitted by a battery module assembly device includes: after the at least one battery cell is loaded but before entering a production line, performing a sampling inspection on the at least one battery cell based on data to be inspected of a loading stage transmitted by the battery module assembly device; after the at least one battery cell enters the production line, performing a full inspection on the at least one battery cell after entering the production line based on data to be inspected of a production stage transmitted by the battery module assembly device; and after the at least one battery cell is assembled into the battery module, performing a reinspection on the battery cell in the battery module based on data to be inspected of an assembly stage transmitted by the battery module assembly device.

It can be understood that sampling inspection is performed on the battery cell at the loading stage, full inspection is performed on the battery cell at the production stage, and reinspection is performed on the battery cell in the battery module at the assembly stage. In this way, when an anomaly occurs at any stage, the anomaly can be immediately handled, while also achieving full-process management and control of the entire assembly process of the battery module, thereby improving the effectiveness of battery module assembly and increasing the final qualification rate of battery modules discharged from the port.

In the above solution, the data to be inspected of the loading stage includes an identifier of at least one first battery cell selected from the at least one battery cell; performing the sampling inspection on the at least one battery cell based on the data to be inspected of the loading stage transmitted by the battery module assembly device includes: receiving the identifier of the at least one first battery cell transmitted by the battery module assembly device; determining first battery data of the at least one first battery cell based on the identifier of the at least one first battery cell; and inspecting the at least one first battery cell based on the first battery data and a production work order to implement the sampling inspection on the at least one battery cell.

It can be understood that a correspondence relationship between the identifier of the battery cell and the battery data is prestored. In this way, the battery module assembly device only needs to transmit the identifier of at least one first battery cell to the control device without transmitting the battery data, thereby reducing the communication load between the battery module assembly device and the control device and improving the efficiency of sampling inspection.

In the above solution, the first battery data includes a production batch and an inventory in/out record of the at least one first battery cell; inspecting the at least one first battery cell based on the first battery data and the production work order includes: in the case that the production batch and the inventory in/out record of the at least one first battery cell match the production work order, determining a sampling inspection result indicating that the at least one first battery cell has no anomaly; and in the case that the production batch and the inventory in/out record of the at least one first battery cell do not match the production work order, determining a sampling inspection result indicating that the at least one first battery cell has an anomaly.

It can be understood that matching the production batch of the first battery cell with the production work order is intended to ensure that the incoming battery cell is the required battery cell for the current production line to produce battery modules, thereby implementing sampling inspection on the battery cell from the perspective of matching between the battery cell and the production work order. Matching the inventory in/out record of the first battery cell with the production work order is intended to implement sampling inspection on the battery cell from the perspective of time management and control. In this way, the qualification and matching of the incoming battery cell are ensured.

In the above solution, the data to be inspected of the production stage includes the identifier of the at least one battery cell after entering the production line and performance data of the at least one battery cell after entering the production line; performing the full inspection on the at least one battery cell after entering the production line based on the data to be inspected of the production stage transmitted by the battery module assembly device includes: receiving the identifier of the at least one battery cell after entering the production line and the performance data of the at least one battery cell after entering the production line transmitted by the battery module assembly device; determining second battery data of the at least one battery cell after entering the production line based on the identifier of the at least one battery cell after entering the production line; performing a first full inspection on the at least one battery cell after entering the production line based on the second battery data and the production work order; and performing a second full inspection on the at least one battery cell after entering the production line based on the performance data and preset performance of the at least one battery cell after entering the production line.

It can be understood that performing the first full inspection on the at least one battery cell after entering the production line based on the second battery data and the production work order is intended to implement full inspection on the battery cell on the production line (battery cells at the production stage) from the perspectives of time management and control and matching between the battery cell and the production work order, thereby ensuring the qualification and matching of the battery cell on the production line. Performing the second full inspection on the at least one battery cell after entering the production line based on the performance data and the preset performance of the at least one battery cell after entering the production line is intended to implement full inspection on the battery cell on the production line from the perspective of the performance of the battery cell itself, thereby enabling control of the battery cell on the production line from multiple perspectives.

In the above solution, the performance data includes a voltage of the at least one battery cell after entering the production line and a temperature of the at least one battery cell after entering the production line, and the preset performance includes an association relationship between the voltage and the temperature of the battery cell; performing the second full inspection on the at least one battery cell after entering the production line based on the performance data and the preset performance of the at least one battery cell after entering the production line includes: in the case that the voltage of the at least one battery cell after entering the production line and the temperature of the at least one battery cell after entering the production line both satisfy the association relationship, determining a second full inspection result indicating that the at least one battery cell after entering the production line has no anomaly; and in the case that at least one of the voltage of the at least one battery cell after entering the production line and the voltage temperature of the at least one battery cell after entering the production line does not satisfy the association relationship, determining a second full inspection result indicating that the at least one battery cell after entering the production line has an anomaly.

It can be understood that by matching the temperature of the battery cell on the production line and the voltage of the battery cell on the production line with the association relationship between the voltage and the temperature of the battery cell, a full inspection can be performed on the battery cell on the production line from the perspective of the performance of the battery itself, thereby ensuring the qualification of the battery cell on the production line.

In the above solution, the data to be inspected of the assembly stage includes an identifier and a real-time assembly sequence of at least one second battery cell in the battery module; performing the reinspection on the battery cell in the battery module based on the data to be inspected of the assembly stage transmitted by the battery module assembly device includes: receiving the identifier and the real-time assembly sequence of the at least one second battery cell transmitted by the battery module assembly device; determining third battery data of the at least one second battery cell based on the identifier of the at least one second battery cell; and performing a reinspection on the battery cell in the battery module based on the third battery data, the real-time assembly sequence, and battery module assembly data, where the battery module assembly data is stored during assembly.

It can be understood that performing reinspection based on the third battery data, the real-time assembly sequence, and the battery module assembly data is intended to reinspect the battery cell in the battery module from the perspectives of consistency, process integrity, and assembly sequence of the battery cells in the battery module, thereby ensuring that each battery module is qualified, and preventing discrepancies between the actual battery module and the records due to equipment errors and human intervention.

In the above solution, the battery module assembly data includes reference battery data and a reference assembly sequence; performing the reinspection on the battery cell in the battery module based on the third battery data, the real-time assembly sequence, and the battery module assembly data includes: in the case that the third battery data matches the reference battery data and the real-time assembly sequence matches the reference assembly sequence, determining a reinspection result indicating that the battery module has no anomaly; and in the case that the third battery data does not match the reference battery data or the real-time assembly sequence does not match the reference assembly sequence, determining a reinspection result indicating that the battery module has an anomaly.

It can be understood that performing reinspection on the battery cell in the battery module by determining whether the battery data stored during assembly (reference battery data) is identical to the battery data collected in real time from the assembled battery module (real-time battery data), and whether the assembly sequence stored during assembly (reference assembly sequence) is identical to the assembly sequence collected in real time from the assembled battery module (real-time assembly sequence) can ensure that the battery cell in the battery module is reinspected from the perspectives of consistency, process integrity, and assembly sequence of the battery cells in the battery module, thereby ensuring that each battery module is qualified, and preventing discrepancies between the actual battery module and the records due to equipment errors and human intervention.

In the above solution, the battery module assembly method further includes: receiving a battery module identifier application request transmitted by the battery module assembly device, where the battery module identifier application request carries process data of the battery module and the identifier of the at least one second battery cell in the battery module, and the process data is data generated during an entire assembly process of the battery module; performing an integrity inspection on the battery module based on the process data and the identifier of the at least one second battery cell; and in the case that the battery module passes the integrity inspection, transmitting a response message, indicating that the battery module can be bound to a corresponding battery module identifier, to the battery module assembly device.

It can be understood that by performing integrity inspection on the information carried in the battery module identifier application request through the control device, the data accuracy and traceability can be ensured, thereby facilitating subsequent retrieval and review.

In the above solution, performing the integrity inspection on the battery module based on the process data and the identifier of the at least one second battery cell includes: determining an assembly state of the at least one second battery cell based on the identifier of the at least one second battery cell; and in the case that the process data satisfies process conditions and the assembly state of the at least one second battery cell is unassembled, determining that the battery module passes the integrity inspection.

It can be understood that a one-to-one correspondence relationship between the battery cell and the battery module can be ensured to prevent battery misassembly.

In the above solution, the process data satisfying the process conditions includes: a first equipment operation in the process data matching a preset second equipment operation; and data records generated under each of the first assembly operations being complete.

Provided is a battery module assembly method applied to a battery module assembly device. The battery module assembly method includes:

during an entire assembly process of at least one battery cell from incoming to assembly into a battery module, collecting data to be inspected a plurality of times; transmitting the data to be inspected to a control device to enable the control device to perform a plurality of inspections on the at least one battery cell based on the data to be inspected; and receiving at least one of results of the plurality of inspections transmitted by the control device, and processing the at least one battery cell based on the at least one of the results of the plurality of inspections, to achieve full-process management of battery module assembly.

It can be understood that, during the entire assembly process of the battery module, real-time collection of battery data of multiple stages is performed through the battery module equipment device to obtain data to be inspected of multiple stages; and a plurality of inspections are performed on the battery cell by the control device based on the data to be inspected of multiple stages. Therefore, anomalies in the battery module assembly process can be promptly addressed based on the results of the plurality of inspections, thereby achieving full-process management of battery module assembly. Furthermore, since a plurality of inspections are performed throughout the entire process of battery module assembly, an effective closed loop of data for the entire assembly process of the battery module can be achieved, enabling effective management and control of data of the entire assembly process of the battery module, and solving the problem of mismatch between the battery cells and the battery module caused by anomalies such as battery cell damage, manual intervention, complicated assembly operations, and equipment failures.

In the above solution, during the entire assembly process of at least one battery cell from incoming to assembly into a battery module, collecting the data to be inspected a plurality of times includes: after the at least one battery cell is loaded but before entering a production line, collecting an identifier of at least one first battery cell selected from the at least one battery cell, and taking the identifier of the at least one first battery cell as data to be inspected of a loading stage; after the at least one battery cell enters the production line, collecting an identifier of the at least one battery cell after entering the production line and performance data of the at least one battery cell after entering the production line, and taking the identifier of the at least one battery cell after entering the production line and the performance data of the at least one battery cell after entering the production line as data to be inspected of a production stage; and after the at least one battery cell is assembled into the battery module, collecting an identifier and a real-time assembly sequence of at least one second battery cell in the battery module, and taking the identifier and the real-time assembly sequence of the at least one second battery cell as data to be inspected of an equipment stage.

It can be understood that collecting the data to be inspected of the loading stage is intended to perform sampling inspection on the incoming battery cell at the loading stage; collecting the data to be inspected of the production stage is intended to perform full inspection on the battery cell on the production line at the production stage; and collecting the data to be inspected of the assembly stage is intended to perform reinspection on the battery cell in the assembled battery module at the assembly stage. In this way, when an anomaly occurs at any stage, the anomaly can be immediately handled, while also achieving full-process management and control of the entire assembly process of the battery module, thereby improving the effectiveness of battery module assembly and increasing the final qualification rate of battery modules discharged from the port.

In the above solution, collecting the identifier of at least one first battery cell selected from the at least one battery cell includes: selecting at least one first battery cell from the at least one battery cell; and scanning the at least one first battery cell using a first camera to obtain the identifier of the at least one first battery cell.

It can be understood that scanning a graphic code of the at least one selected first battery cell can improve the inspection rate of the incoming battery cell.

In the above solution, collecting the identifier of the at least one battery cell after entering the production line and the performance data of the at least one battery cell after entering the production line includes: scanning the at least one battery cell after entering the production line using a second camera to obtain the identifier of the at least one battery cell after entering the production line; detecting a voltage of the at least one battery cell after entering the production line to obtain the voltage of the at least one battery cell after entering the production line; detecting a temperature of the at least one battery cell after entering the production line using two types of temperature detection methods to obtain a first temperature and a second temperature; determining the temperature of the at least one battery cell after entering the production line based on the first temperature, the second temperature, and a temperature threshold; and taking the voltage of the at least one battery cell after entering the production line and the temperature of the at least one battery cell after entering the production line as the performance data of the at least one battery cell after entering the production line.

It can be understood that since temperature is greatly affected by external environment, by detecting the temperature of the battery cell on the production line using two different temperature measurement methods, actual temperature differences and measurement deviations can be avoided, thereby eliminating interference from the external environment. By taking the temperature and the voltage of the battery cell as the performance data of the battery cell, the battery cell on the production line can be inspected from the perspective of the performance of the battery itself, thereby ensuring the quality of the assembled battery module.

In the above solution, determining the temperature of the at least one battery cell after entering the production line based on the first temperature, the second temperature, and the temperature threshold includes: determining whether a temperature difference between the first temperature and the second temperature satisfies the temperature threshold; and
in the case that the temperature difference satisfies the temperature threshold, determining the temperature of the at least one battery cell after entering the production line based on the first temperature and the second temperature.

It can be understood that, in the case of determining whether the temperature difference between the first temperature and the second temperature satisfies the temperature threshold, determining the temperature of the at least one battery cell after entering the production line based on the first temperature and the second temperature can improve the accuracy of the temperature of the at least one battery cell after entering the production line.

In the above solution, collecting the identifier and the real-time assembly sequence of at least one second battery cell in the battery module includes: determining a real-time assembly sequence of the battery cell in the battery module; and scanning the at least one second battery cell in the battery module using a third camera based on the real-time assembly sequence to obtain the identifier of the at least one second battery cell.

It can be understood that by taking the identifier and the real-time assembly sequence of the battery cell in the battery module as the data to be inspected of the equipment stage, the battery cell in the battery module can be inspected from the perspectives of consistency, process integrity, and assembly sequence of the battery cells in the battery module to ensure that each battery module is qualified, and to prevent discrepancies between the actual battery module and the records due to equipment errors and human intervention.

In the above solution, the results of the plurality of inspections include a sampling inspection result, a full inspection result, and a reinspection result; processing the at least one battery cell based on the at least one of the results of the plurality of inspections includes: in the case that the sampling inspection result, the full inspection result, and the reinspection result all indicate that the at least one battery cell has no anomaly, transmitting a battery module identifier application request to the control device, where the battery module identifier application request is used to bind the battery module to a corresponding battery module identifier; receiving a response message transmitted by the control device in response to the battery module identifier application request; and in the case that the response message indicates that the battery module can be bound to the corresponding battery module identifier, binding the battery module to the corresponding battery module identifier, and allowing the battery module to be discharged from a discharge port of the battery module assembly device.

It can be understood that an actual binding operation is performed in a real scenario only in the case that the response message transmitted by the control device in response to the battery module identifier application request indicates that the battery module can be bound to the corresponding battery module identifier, such that the data integrity of the battery module and a one-to-one correspondence relationship between the battery module and the battery module identifier can be ensured.

In the above solution, the battery module assembly method further includes: in the case that the at least one of the results of the plurality of inspections indicates that the at least one battery cell has an anomaly or the response message indicates that the battery module fails to be bound to the corresponding battery module identifier, determining an abnormal battery cell; and allowing the abnormal battery cell to be discharged from an anomaly output port of the battery module assembly device.

It can be understood that in the case that at least one of the results of the plurality of inspections transmitted by the control device indicates that at least one battery cell has an anomaly, or the response message in response to the battery module identifier application request indicates that the battery module fails to be bound to the corresponding battery module identifier, abnormal battery cells will be identified and discharged from the current production line.

Provided is a battery module assembly system. The system includes a control device and a battery module assembly device. The battery module assembly device is configured to, during an entire assembly process of at least one battery cell from incoming to assembly into a battery module, collect data to be inspected a plurality of times; and transmit the data to be inspected to the control device, to enable the control device to perform a plurality of inspections on the at least one battery cell based on the data to be inspected. The control device is configured to perform a plurality of inspections on the at least one battery cell based on the data to be inspected transmitted by the battery module assembly device; and transmit at least one of results of the plurality of inspections to the battery module assembly device. The battery module assembly device is configured to receive at least one of results of the plurality of inspections transmitted by the control device, and process the at least one battery cell based on the at least one of the results of the plurality of inspections, to achieve full-process management of battery module assembly.

It can be understood that, during the entire assembly process of the battery module, real-time collection of battery data of multiple stages is performed through the battery module equipment device to obtain data to be inspected of multiple stages; and a plurality of inspections are performed on the battery cell by the control device based on the data to be inspected of multiple stages. Therefore, anomalies in the battery module assembly process can be promptly addressed based on the results of the plurality of inspections, thereby achieving full-process management of battery module assembly. Furthermore, since a plurality of inspections are performed throughout the entire process of battery module assembly, an effective closed loop of data for the entire assembly process of the battery module can be achieved, enabling effective management and control of data of the entire assembly process of the battery module, and solving the problem of mismatch between the battery cells and the battery module caused by anomalies such as battery cell damage, manual intervention, complicated assembly operations, and equipment failures.

According to the battery module assembly method and the battery module assembly system provided by the embodiments of the present invention, during the entire assembly process of at least one battery cell from incoming to assembly into a battery module, a plurality of inspections can be performed on the at least one battery cell based on data to be inspected transmitted by a battery module assembly device; and at least one of results of the plurality of inspections is transmitted to the battery module assembly device to achieve full-process management of battery module assembly. In this way, it can be understood that, during the entire assembly process of the battery module, real-time collection of battery data of multiple stages is performed through the battery module equipment device to obtain data to be inspected of multiple stages; and a plurality of inspections are performed on the battery cell by the control device based on the data to be inspected of multiple stages. Therefore, anomalies in the battery module assembly process can be promptly addressed based on the results of the plurality of inspections, thereby achieving full-process management of battery module assembly. Furthermore, since a plurality of inspections are performed throughout the entire process of battery module assembly, an effective closed loop of data for the entire assembly process of the battery module can be achieved, enabling effective management and control of data of the entire assembly process of the battery module, and solving the problem of mismatch between the battery cells and the battery module caused by anomalies such as battery cell damage, manual intervention, complicated assembly operations, and equipment failures.

### BRIEF DESCRIPTION OF THE DRAWINGS

FIG. 1 is a first schematic flowchart of a battery module assembly method according to an embodiment of the present invention;
FIG. 2 is a second schematic flowchart of a battery module assembly method according to an embodiment of the present invention;
FIG. 3 is a third schematic flowchart of a battery module assembly method according to an embodiment of the present invention;
FIG. 4 is a fourth schematic flowchart of a battery module assembly method according to an embodiment of the present invention;
FIG. 5 is a schematic flowchart of interaction of a battery module assembly system according to an embodiment of the present invention; and
FIG. 6 is a schematic structural diagram of a battery module assembly system according to an embodiment of the present invention.

### DETAILED DESCRIPTION

The technical solutions of embodiments of the present invention are clearly and completely described below in conjunction with the drawings of the embodiments of the present invention.

It should be understood that reference throughout the specification to "embodiment of the present invention" or "aforementioned embodiment" means that particular features, structures, or characteristics related to the embodiment are included in at least one embodiment of the present invention. Thus, "embodiment of the present invention" or "in the aforementioned embodiment" appearing in various places throughout the specification does not necessarily refer to the same embodiment. Furthermore, these particular features, structures or characteristics may be combined in any suitable manner in one or more embodiments. In the various embodiments of the present invention, the numerical order of the above processes does not imply the sequence of execution. The execution order of these processes should be determined by their functions and internal logic, and should not impose any limitation on the implementation of the embodiments of the present invention. The serial numbers of the embodiments of the present invention are merely for description, and do not represent the superiority or inferiority of the embodiments.

Unless otherwise specified, any step in the embodiments of the present invention performed by an electronic device may be performed by the processor of the electronic device. It should also be noted that the embodiments of the present invention do not limit the order in which the electronic device performs the following steps. In addition, the data processing methods employed in different embodiments may be the same or different. Furthermore, it should be noted that any step in the embodiments of the present invention can be performed independently by the electronic device, that is, the electronic device, when performing any step in the following embodiments, may not depend on the execution of other steps.

It should be understood that the specific embodiments described herein are merely illustrative of the present invention and are not intended to limit the present invention.

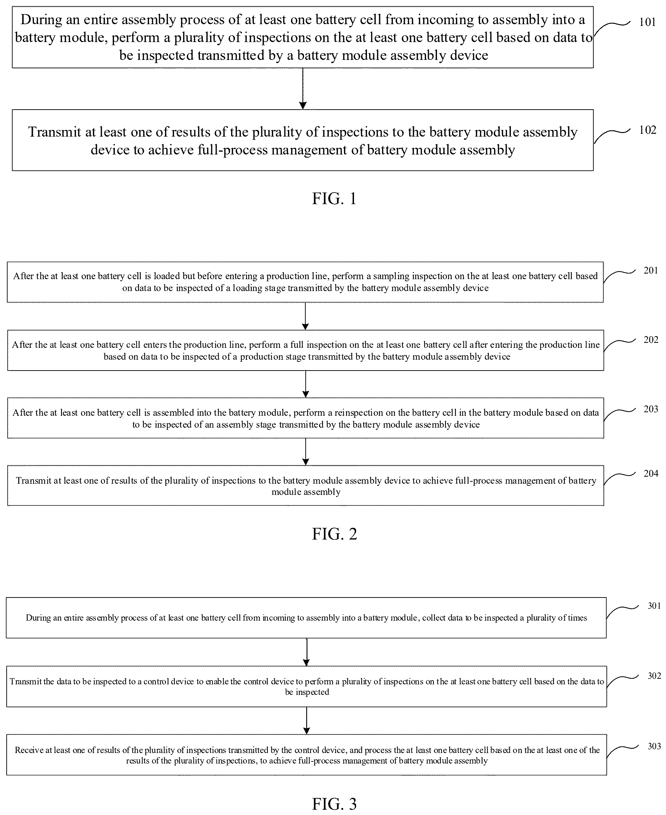

The embodiments of the present invention provide a battery module assembly method, which can be applied to a control device. Referring to FIG. 1, the method includes the following steps 101 and 102.

In step 101, during an entire assembly process of at least one battery cell from incoming to assembly into a battery module, a plurality of inspections are performed on the at least one battery cell based on data to be inspected transmitted by a battery module assembly device.

In this step, the battery module assembly device is configured to assemble at least one battery cell into a battery module, collect battery data during the assembly process of the battery module, and transmit the battery data collected in real time as the data to be inspected to the control device. In a feasible implementation, the battery module assembly device may refer to a plurality of devices involved in the battery module assembly process. For example, the battery module assembly device may refer to devices such as a sampling inspection device for incoming battery, a full inspection device for battery on the production line, and a reinspection device for battery module, and may further refer to devices such as a grabbing robot, a code scanning camera, a cleaning device, and a shaping device. The control device is configured to store and verify battery data during the assembly process of the battery module, thereby achieving full-process management and control of battery module assembly.

Generally, from incoming of a battery cell to assembly into a battery module, a plurality of assembly operations such as material incoming, entering the production line, cleaning, gluing, assembling, and shaping are performed. In the present invention, three relatively critical stages are selected from the entire assembly process of the battery module for inspection to achieve full-process management and control of battery module assembly. In a feasible implementation, the entire assembly process of the battery cell from incoming to assembly into a battery module may include three stages: an incoming stage, a production stage, and an assembly stage. The incoming stage may refer to a stage in which the battery cell is transported to the material fetching position of the production line and waits to be picked up. Illustratively, the battery may be placed in an incoming material pallet, and by transporting the incoming material pallet, the battery cell in the incoming material pallet is transported to the material fetching position of the production line and waits to be picked up. The production stage may refer to a stage of picking up the battery cell onto the production line. The assembly stage may refer to a stage in which the battery cell has been assembled into a battery module. The data to be inspected may refer to battery data collected in real time throughout the entire process of battery module assembly.

During the entire assembly process of at least one battery cell from incoming to assembly into a battery module, performing a plurality of inspections on the at least one battery cell based on data to be inspected transmitted by a battery module assembly device is intended to achieve full-process management and control of battery module assembly and ensure that the product data of the battery module is accurate and traceable.

In a feasible implementation, the battery module assembly device can collect the battery data of multiple stages during the entire assembly process of the battery module in real time, and transmit the collected battery data of the multiple stages as the data to be inspected to the control device; after receiving the data to be inspected of the multiple stages, the control device uses the data to be inspected to verify the at least one battery cell for a plurality of times. In this way, full-process management and control of battery module assembly can be achieved.
In step 102, at least one of results of the plurality of inspections is transmitted to the battery module assembly device to achieve full-process management of battery module assembly.
In this step, transmitting at least one of results of the plurality of inspections to the battery module assembly device can guide the battery module assembly device to promptly process the at least one battery cell based on the at least one of results of the plurality of inspections, thereby preventing the presence of unqualified battery cells or battery cells that do not match the battery module in the battery module, and thus achieving full-process management of battery module assembly.

In a feasible implementation, data interaction can be performed through a communication channel between the control device and the battery module assembly device. For example, the battery module assembly device can transmit the data to be inspected to the control device through the channel, and the control device can transmit the at least one of results of the plurality of inspections to the battery module assembly device through the channel. Further, the channel may also be an encrypted channel to ensure the security of the interaction data.

During implementation, the battery module assembly device collects the battery data of the loading stage in real time, and transmits the battery data as the data to be inspected to the control device; the control device inspects the verification data of the loading stage, and transmits the inspection result to the battery module assembly device; the battery module assembly device performs an operation for entering the production line when determining, based on the inspection result, that the verification data of the loading stage is free of anomalies, then collects the battery data of the production line stage (battery cells after entering the production line), and transmits the battery data as the data to be inspected of the production line stage to the control device; the control device inspects the verification data of the production line stage, and transmits the inspection result to the battery module assembly device; the battery module assembly device performs an assembly operation when determining, based on the inspection result, that the battery data of the production line stage is free of anomalies, then collects the battery data of the assembly stage (after battery modules are assembled), and transmits the battery data as the data to be inspected of the assembly stage to the control device; the control device inspects the verification data of the assembly stage, and transmits the inspection result to the battery module assembly device; and the battery module assembly device proceeds to normal discharge according to the production process and completes subsequent processes such as boxing when determining, based on the inspection result, that the battery data of the assembly stage is correct.

It can be understood that, during the entire assembly process of the battery module, real-time collection of battery data of multiple stages is performed through the battery module equipment device to obtain data to be inspected of multiple stages; and a plurality of inspections are performed on the battery cell by the control device based on the data to be inspected of multiple stages. Therefore, anomalies in the battery module assembly process can be promptly addressed based on the results of the plurality of inspections, thereby achieving full-process management of battery module assembly. Furthermore, since a plurality of inspections are performed throughout the entire process of battery module assembly, an effective closed loop of data for the entire assembly process of the battery module can be achieved, enabling effective management and control of data of the entire assembly process of the battery module, and solving the problem of mismatch between the battery cells and the battery module caused by anomalies such as battery cell damage, manual intervention, complicated assembly operations, and equipment failures.

The embodiments of the present invention provide a battery module assembly method, which can be applied to a control device. Referring to FIG. 2, the method includes the following steps 201 to 204.

In step 201, after the at least one battery cell is loaded but before entering a production line, a sampling inspection is performed on the at least one battery cell based on data to be inspected of a loading stage transmitted by the battery module assembly device.

In this step, after the at least one battery cell being loaded but before entering the production line may refer to an incoming stage in which the battery cell is transported to the material fetching position of the production line and waits to be picked up. The data to be inspected of the loading stage may refer to battery data collected in real time after the battery cell is loaded but before entering the production line. In a feasible implementation, the data to be inspected of the loading stage may include the identifier of the battery cell, or may further include battery data such as production batches, inventory in/out records, and production work orders.

Performing sampling inspection on the at least one battery cell is mainly to inspect the battery cell from the perspective of time management and control, so as to control battery data at the material incoming end, thereby preventing mismatches between the incoming battery cell and the production work order caused by errors during warehouse management, logistics distribution, or loading by employee, and avoiding situations in which a large number of battery materials that do not match the work order enter the production line and cause production line shutdown and material clearing.

In a feasible implementation, the at least one battery cell may be subjected to sampling inspection from the perspectives of time management and control and matching between the battery cell and the production work order. The sampling inspection refers to inspecting a portion of the battery cells in the at least one battery cell, rather than all of the battery cells. The reason for such sampling inspection lies in that the battery cells are generally placed in incoming material pallets for transportation, and the battery cells in the same incoming pallet are usually of the same batch or the same type. Therefore, for the battery cells in the same incoming material pallet, a portion of the battery cells may be selected from the same incoming material pallet, and the selected battery cells are inspected to achieve the purpose of sampling inspection on the at least one battery cell.

In step 202, after the at least one battery cell enters the production line, a full inspection is performed on the at least one battery cell after entering the production line based on data to be inspected of a production stage transmitted by the battery module assembly device.

In this step, after the at least one battery cell entering the production line may refer to a production stage in which the battery is picked up onto the production line. The data to be inspected of the production stage may refer to battery data collected in real time after the battery cell enters the production line. In a feasible implementation, the data to be inspected of the production stage may include the identifier, the temperature, the voltage, and the like of the battery cell, or may further include: data such as production batches, inventory in/out records, and production work orders.

Performing full inspection on the at least one battery cell after entering the production line is mainly to perform comprehensive inspection on the battery cell from the perspective of the performance of the battery itself, so as to ensure that all battery cells entering the production line for assembly are qualified products, thereby preventing other battery cells from being mixed in at the packaging stage due to special reasons, which can not only ensure the qualification of the battery cells on the production line, but also can ensure the matching between the battery cells and the battery module.

In a feasible implementation, the at least one battery cell after entering the production line may be subjected to full inspection from the perspectives of the performance of the battery itself and time management and control. The full inspection refers to inspecting each of the battery cells in the at least one battery cell after entering the production line, namely, inspecting all the battery cells. The purpose of such full inspection lies in that the battery cells after entering the production line will be assembled into battery modules, and the qualification of each battery cell and its matching with the battery module will affect the performance and qualification of the assembled battery module.

In step 203, after the at least one battery cell is assembled into the battery module, a reinspection is performed on the battery cell in the battery module based on data to be inspected of an assembly stage transmitted by the battery module assembly device.

In this step, the at least one battery cell being assembled into the battery module may refer to an assembly stage of assembling the battery into the battery module. The data to be inspected of the assembly stage may include battery data such as the identifier of each battery cell in the battery module and the assembly sequence of the battery cell.

Performing reinspection on the battery cell in the battery module is mainly to inspect the battery cell from the perspectives of consistency, process integrity, and assembly sequence of the battery cells in the battery module, so as to ensure consistency as well as accurate and complete process parameters of the batteries during the assembly process of the battery module, thereby providing quality control at the final output stage of the battery module, ensuring that each battery module is qualified, and preventing discrepancies between the actual battery module and the records due to equipment errors and human intervention.

In a feasible implementation, the battery cell in the battery module may be subjected to reinspection from the perspectives of consistency, process integrity, and assembly sequence of the battery cells in the battery module.

In step 204, at least one of results of the plurality of inspections is transmitted to the battery module assembly device to achieve full-process management of battery module assembly.

Herein, steps 201 to 203 correspond to the aforementioned step 101, and step 204 corresponds to the aforementioned step 102. During the implementation, reference can be made to the specific implementations of the aforementioned steps.

It can be understood that sampling inspection is performed on the battery cell at the loading stage, full inspection is performed on the battery cell at the production stage, and reinspection is performed on the battery cell in the battery module at the assembly stage. In this way, when an anomaly occurs at any stage, the anomaly can be immediately handled, while also achieving full-process management and control of the entire assembly process of the battery module, thereby improving the effectiveness of battery module assembly and increasing the final qualification rate of battery modules discharged from the port.

In some embodiments, in the case that the data to be inspected of the loading stage includes the identifier of at least one first battery cell selected from the at least one battery cell, the above step 201 can be implemented by the following steps 2011 to 2013.

In step 2011, the identifier of the at least one first battery cell transmitted by the battery module assembly device is received.

In this step, the identifier of any battery cell is used to uniquely identify the battery cell. The at least one first battery cell is a battery cell selected from the at least one battery cell for sampling inspection.

In step 2012, first battery data of the at least one first battery cell is determined based on the identifier of the at least one first battery cell.

In this step, the first battery data may refer to battery data of the at least one first battery cell, and the first battery data may include battery data such as production batches and inventory in/out records of the at least one first battery cell.

In a feasible implementation, the battery data corresponding to each battery cell may be prestored into the control device. For example, the battery data corresponding to each battery cell can be stored into the control device based on the correspondence relationship between the identifier and the battery data of the battery cell. In this way, during sampling inspection, the battery module assembly device may only transmit the identifier of the at least one first battery cell, and the control device can determine the first battery data of the at least one first battery cell based on the identifier of the at least one first battery cell and the correspondence relationship.

In step 2013, the at least one first battery cell is inspected based on the first battery data and a production work order to implement the sampling inspection on the at least one battery cell.

In this step, the production work order may refer to relevant data of the battery module produced in the current production line. For example, the production work order may include data such as the type of battery cells, the number of battery cells, and the assembly form required by the battery module produced in the current production line. Illustratively, the production work order may be transmitted by the battery module assembly device together with the identifier of the at least one first battery cell, or may be prestored in the control device, and the embodiments of the present invention do not limit the manner of acquiring the production work order.

In a feasible implementation, the at least one first battery cell may be inspected from the perspective of time management and control based on the first battery data and the production work order.

It can be understood that a correspondence relationship between the identifier of the battery cell and the battery data is prestored. In this way, the battery module assembly device only needs to transmit the identifier of at least one first battery cell to the control device without transmitting the battery data, thereby reducing the communication load between the battery module assembly device and the control device and improving the efficiency of sampling inspection.

Further, in some embodiments, in the case that the first battery data includes the production batch and the inventory in/out record of the at least one first battery cell, "inspecting the at least one first battery cell based on the first battery data and a production work order" in the above step 2013 may be implemented by the following steps 2013a to 2013b.

In step 2013a, in the case that the production batch and the inventory in/out record of the at least one first battery cell match the production work order, a sampling inspection result indicating that the at least one first battery cell has no anomaly is determined.

In this step, the production batch and the inventory in/out record of the at least one first battery cell matching the production work order may mean that the production batch of the first battery cell satisfies the production batch condition in the production work order, and the inventory in/out record of the first battery cell satisfies the inventory in/out condition in the production work order. The production batch condition may be one or more preset production batches. For example, the production batch condition may be battery cells in batch 1, and the inventory in/out condition may refer to entry into or exit from inventory within a specific time. For example, the inventory in/out condition may be that the battery cells enter the inventory within time 1, and exit the inventory within time 2, and the interval between the entry and the exit does not exceed 15 days. The sampling inspection result may include that the at least one first battery cell has no anomaly, and the at least one first battery cell has an anomaly, where the at least one first battery cell having no anomaly indicates a pass in the sampling inspection, and the at least one first battery cell having an anomaly indicates a fail in the sampling inspection.

In a feasible implementation, if the production batch of the at least one first battery cell satisfies the production batch condition in the production work order, and the inventory in/out record of the at least one first battery cell satisfies the inventory in/out condition in the production work order, a sampling inspection result indicating that the at least one first battery cell has no anomaly is obtained. Illustratively, the production batch condition is battery cells in batch 1, and the inventory in/out condition is that the battery cells enter the inventory within time 1, and exit the inventory within time 2, and the interval between the entry and the exit does not exceed 15 days. In such a case, if the production batch of the at least one first battery cell is batch 1, and the inventory in/out record of the at least one first battery cell indicates entry within time 1 and exit within time 2 with an interval between the entry and the exit not exceeding 15 days, then a sampling inspection result indicating that the at least one first battery cell has no anomaly is obtained.

In step 2013b, in the case that the production batch and the inventory in/out record of the at least one first battery cell do not match the production work order, a sampling inspection result indicating that the at least one first battery cell has an anomaly is determined.

In this step, the production batch and the inventory in/out record of the at least one first battery cell being not matching the production work order may mean that at least one of the production batch and the inventory in/out record of the first battery cell does not satisfy the production work order. At least one of the production batch of the first battery cell and the inventory in/out record being not satisfying the production work order may include the following three cases: in the first case, the production batch of the first battery cell does not satisfy the production batch condition in the production work order, and the inventory in/out record of the first battery cell satisfies the inventory in/out condition in the production work order; in the second case, the production batch of the first battery cell satisfies the production batch condition in the production work order, and the inventory in/out record of the first battery cell does not satisfy the inventory in/out condition in the production work order; and in the third case, the production batch of the first battery cell satisfies the production batch condition in the production work order, and the inventory in/out record of the first battery cell satisfies the inventory in/out condition in the production work order.

In a feasible implementation, if at least one of the production batch and the inventory in/out record of the first battery cell does not satisfy the production work order, a sampling inspection result indicating that the at least one first battery cell has an anomaly can be obtained. Illustratively, the production batch condition is battery cells in batch 1, and the inventory in/out condition is that the battery cells enter the inventory within time 1, and exit the inventory within time 2, and the interval between the entry and the exit does not exceed 15 days. In such a case, if the production batch of the at least one first battery cell is batch 2, while the inventory in/out record of the at least one first battery cell indicates entry within time 1 and exit within time 2 with an interval between the entry and the exit not exceeding 15 days, then a sampling inspection result indicating that the at least one first battery cell has an anomaly is obtained.

In another exemplary case, the production batch condition is battery cells in batch 1, and the inventory in/out condition is that the battery cells enter the inventory within time 1, and exit the inventory within time 2, and the interval between entry and exit does not exceed 15 days. In such a case, if the production batch of the at least one first battery cell is batch 1, while the inventory in/out record of the at least one first battery cell indicates entry within time 1 and exit within time 2 with an interval between the entry and the exit exceeding 15 days, then a sampling inspection result indicating that the at least one first battery cell has an anomaly is obtained.

In yet another exemplary case, the production batch condition is battery cells in batch 1, and the inventory in/out condition is that the battery cells enter the inventory within time 1, and exit the inventory within time 2, and the interval between entry and exit does not exceed 15 days. In such a case, if the production batch of the at least one first battery cell is batch 2, while the inventory in/out record of the at least one first battery cell indicates entry within time 1 and exit within time 2 with an interval between the entry and the exit exceeding 15 days, then a sampling inspection result indicating that the at least one first battery cell has an anomaly is obtained.

It can be understood that matching the production batch of the first battery cell with the production work order is intended to ensure that the incoming battery cell is the required battery cell for the current production line to produce battery modules, thereby implementing sampling inspection on the battery cell from the perspective of matching between the battery cell and the production work order. Matching the inventory in/out record of the first battery cell with the production work order is intended to implement sampling inspection on the battery cell from the perspective of time management and control. In this way, the qualification and matching of the incoming battery cell are ensured.

In some embodiments, in the case that the data to be inspected of the production stage includes the identifier of the at least one battery cell after entering the production line and the performance data of the at least one battery cell after entering the production line, the above step 202 can be implemented by the following steps 2021 to 2024.

In step 2021, the identifier of the at least one battery cell after entering the production line and the performance data of the at least one battery cell after entering the production line transmitted by the battery module assembly device are received.

In this step, the performance data of any battery cell is used to characterize the performance of the battery cell itself. Illustratively, the performance data of any battery cell may include the voltage, the temperature, and the like of the battery cell.

In step 2022, second battery data of the at least one battery cell after entering the production line is determined based on the identifier of the at least one battery cell after entering the production line.

In this step, the second battery data may refer to battery data of the at least one battery cell after entering the production line, and the second battery data may include battery data such as production batches and inventory in/out records of the at least one battery cell after entering the production line.

In a feasible implementation, since the control device prestores the correspondence relationship between the identifier and the battery data of the battery cell, the second battery data of the at least one battery cell after entering the production line can be determined based on the identifier of the at least one battery cell after entering the production line and the correspondence relationship.
In step 2023, a first full inspection is performed on the at least one battery cell after entering the production line based on the second battery data and the production work order.

In this step, the first full inspection may refer to performing a full inspection on the at least one battery cell after entering the production line from the perspectives of time management and control and matching between the battery cell and the production work order.

It should be noted that the operation of performing the first full inspection on the at least one battery cell after entering the production line based on the second battery data and the production work order is similar to the operation of "inspecting the at least one first battery cell based on the first battery data and a production work order" in the above step 2013. Specifically, in the case that the production batch and the inventory in/out record of the at least one first battery cell after entering the production line match the production work order, a first full inspection result indicating that the at least one first battery cell after entering the production line has no anomaly is determined; and in the case that the production batch and the inventory in/out record of the at least one first battery cell do not match the production work order, a first full inspection result indicating that the at least one first battery cell after entering the production line has an anomaly is determined. During the implementation, reference can be made to the specific implementation of "inspecting the at least one first battery cell based on the first battery data and a production work order" in the aforementioned step 2013, which will not be repeated in the embodiments of the present invention.

In step 2024, a second full inspection is performed on the at least one battery cell after entering the production line based on the performance data and preset performance of the at least one battery cell after entering the production line.

In this step, the preset performance may refer to indicators for evaluating the performance of the battery itself. The second full inspection may refer to performing a full inspection on the at least one battery cell after entering the production line from the perspective of the performance of the battery itself.

In a feasible implementation, if the performance data of the at least one battery cell after entering the production line satisfies the preset performance, a second full inspection result indicating that the at least one battery cell after entering the production line has no anomaly is obtained; if the performance data of the at least one battery cell after entering the production line does not satisfy the preset performance, a second full inspection result indicating that the at least one battery cell after entering the production line has an anomaly is obtained.

It can be understood that implementing the first full inspection model for the at least one battery cell after entering the production line based on the second battery data and the production work order is intended to implement full inspection on the battery cell on the production line (battery cells at the production stage) from the perspectives of time management and control and matching between the battery cell and the production work order, thereby ensuring the qualification and matching of the battery cell on the production line. Performing the second full inspection on the at least one battery cell after entering the production line based on the performance data and the preset performance of the at least one battery cell after entering the production line is intended to implement full inspection on the battery cell on the production line from the perspective of the performance of the battery itself, thereby enabling control of the battery cell on the production line from multiple perspectives.

In some embodiments, in the case that the performance data includes the voltage of the at least one battery cell after entering the production line and the temperature of the at least one battery cell after entering the production line, and the preset performance includes the association relationship between the voltage and the temperature of the battery cell, the above step 2024 can be implemented by the following steps 2024a to 2024b.

In step 2024a, in the case that the voltage of the at least one battery cell after entering the production line and the temperature of the at least one battery cell after entering the production line both satisfy the association relationship, a second full inspection result indicating that the at least one battery cell after entering the production line has no anomaly is determined.

In this step, the preset performance may refer to a preset association relationship between the voltage and the temperature of the battery cell. Since the variation of the temperature of the battery cell will affect the voltage of the battery cell, the temperature and the voltage of the battery cell exhibit a negative correlation trend, that is, the higher the temperature of the battery cell, the lower the corresponding voltage; and the lower the temperature of the battery cell, the higher the corresponding voltage. Therefore, it is necessary to preset the association relationship between the voltage and the temperature of the battery cell. Illustratively, under normal circumstances, when the temperature of the battery cell is 25 degrees Celsius (°C), the corresponding voltage is 38 volts (V).

The voltage of the at least one battery cell after entering the production line and the temperature of the at least one battery cell after entering the production line both satisfying the association relationship may mean that the voltage and the temperature of each battery cell in the at least one battery cell after entering the production line both satisfy the association relationship.

In a feasible implementation, the association relationship between the temperature and the voltage of the battery cell may be set based on an actual service scenario. Specifically, the temperature of each battery cell and the corresponding voltage thereof may be expressed in the form of key-value pairs, such that each key-value pair represents one association relationship between the voltage and the temperature of the battery cell. In this case, the specific implementation of determining whether the voltage and the temperature of any battery cell satisfy the association relationship may be: determining whether the association relationship includes an association relationship in which both the voltage and the temperature of the battery cell match; if the association relationship includes the association relationship in which both the voltage and the temperature of the battery cell match, obtaining a determination result that the battery cell has no anomaly; and if the association relationship does not include the association relationship in which both the voltage and the temperature of the battery cell match, obtaining a determination result that the battery cell has an anomaly. After each of the at least one battery cell after entering the production line is determined by the above method, and all determination results indicate no anomaly, a second full inspection result indicating that the at least one battery cell after entering the production line has no anomaly is obtained.

During the implementation, the association relationship between the temperature of the battery cell and the voltage of the battery cell may also be an association relationship between a temperature range of the battery cell and a voltage range of the battery cell.

In step 2024b, in the case that at least one of the voltage of the at least one battery cell after entering the production line and the voltage temperature of the at least one battery cell after entering the production line does not satisfy the association relationship, a second full inspection result indicating that the at least one battery cell after entering the production line has an anomaly is determined.

In a feasible implementation, in the case that a determination result of any battery cell in the at least one battery cell after entering the production line has an anomaly, a second full inspection result indicating that the at least one battery cell after entering the production line has an anomaly is obtained.

It can be understood that by matching the temperature and the voltage of the battery cell on the production line with the association relationship between the voltage of the battery cell and the temperature of the battery cell, a full inspection can be performed on the battery cell on the production line from the perspective of the performance of the battery itself, thereby ensuring the qualification of the battery cell on the production line.

In some embodiments, in the case that the data to be inspected of the assembly stage includes the identifier and the real-time assembly sequence of at least one second battery cell in the battery module, the above step 203 may be implemented by the following steps 2031 to 2033.

In step 2031, the identifier and the real-time assembly sequence of the at least one second battery cell transmitted by the battery module assembly device are received.

In this step, the battery module may refer to a plurality of assembled battery modules (or packs). The at least one second battery cell may refer to at least one battery cell in the battery module. The real-time assembly sequence may refer to an assembly sequence of the battery module that is collected in real time.

In step 2032, third battery data of the at least one second battery cell is determined based on the identifier of the at least one second battery cell.

In this step, the third battery data may refer to battery data of the at least one second battery cell, and the third battery data may include battery data such as production batches and inventory in/out records of the at least one second battery cell.

In a feasible implementation, since the control device prestores the correspondence relationship between the identifier and the battery data of the battery cell, the third battery data of the at least one second battery cell can be determined based on the identifier of the at least one second battery cell and the correspondence relationship.

In step 2033, a reinspection is performed on the battery cell in the battery module based on the third battery data, the real-time assembly sequence, and battery module assembly data, where the battery module assembly data is stored during assembly.

In this step, the battery module assembly data is stored during assembly. In a feasible implementation, during assembly, the battery module assembly device can record the assembly sequence (reference assembly sequence) of each battery module and battery data (reference battery data) of at least one battery cell used during assembly of each battery module, then use the reference assembly sequence and the reference battery data as the battery module assembly data, and store the battery module assembly data into the control device for use in subsequent reinspection.

In a feasible implementation, in the case that the third battery data and the real-time assembly sequence match the battery module assembly data, a reinspection result indicating that the battery module has no anomaly is determined; and in the case that the third battery data and the real-time assembly sequence do not match the battery module assembly data, a reinspection result indicating that the battery module has an anomaly is determined.

It can be understood that performing reinspection based on the third battery data, the real-time assembly sequence, and the battery module assembly data is intended to reinspect the battery cell in the battery module from the perspectives of consistency, process integrity, and assembly sequence of the battery cells in the battery module, thereby ensuring that each battery module is qualified, and preventing discrepancies between the actual battery module and the records due to equipment errors and human intervention.

In some embodiments, in the case that the battery module assembly data includes the reference battery data and the reference assembly sequence, the above step 2033 can be implemented by the following steps 2033a and 2033b.

In step 2033a, in the case that the third battery data matches the reference battery data and the real-time assembly sequence matches the reference assembly sequence, a reinspection result indicating that the battery module has no anomaly is determined.

In this step, the reference battery data may refer to battery data stored during assembly. The reference assembly sequence may refer to an assembly sequence stored during assembly. The third battery data may refer to battery data collected in real time from the assembled battery module. The real-time assembly sequence may refer to an assembly sequence collected in real time from the assembled battery module. Performing reinspection on the battery cell in the battery module may refer to determining whether the battery data stored during assembly (reference battery data) matches the battery data collected in real time from the assembled battery module (real-time battery data), and determining whether the assembly sequence stored during assembly (reference assembly sequence) matches the assembly sequence collected in real time from the assembled battery module (real-time assembly sequence).

The third battery data matching the reference battery data may mean that the third battery data is identical to the reference battery data, which indicates that the battery data stored during assembly is identical to the battery data collected in real time from the assembled battery module. The real-time assembly sequence matching the reference assembly sequence may mean that the real-time assembly sequence is identical to the reference assembly sequence, which indicates that the assembly sequence stored during assembly is identical to the assembly sequence collected in real time from the assembled battery module. In this way, in the case that the battery data stored during assembly is identical to the battery data collected in real time from the assembled battery module, and the assembly sequence stored during assembly is identical to the assembly sequence collected in real time from the assembled battery module, a reinspection result indicating that the battery module has no anomaly is determined.

In step 2033b, in the case that the third battery data does not match the reference battery data or the real-time assembly sequence does not match the reference assembly sequence, a reinspection result indicating that the battery module has an anomaly is determined.

In this step, the third battery data being not matching the reference battery data may mean that the third battery data is different from the reference battery data, which indicates that the battery data stored during assembly is different from the battery data collected in real time from the assembled battery module. The real-time assembly sequence being not matching the reference assembly sequence may mean that the real-time assembly sequence is different from the reference assembly sequence, which indicates that the assembly sequence stored during assembly is different from the assembly sequence collected in real time from the assembled battery module. In this way, in the case that the battery data stored during assembly is different from the battery data collected in real time from the assembled battery module, or the assembly sequence stored during assembly is different from the assembly sequence collected in real time from the assembled battery module, a reinspection result indicating that the battery module has an anomaly is determined.

It can be understood that performing reinspection on the battery in the battery module by determining whether the battery data stored during assembly (reference battery data) is identical to the battery data collected in real time from the assembled battery module (real-time battery data), and whether the assembly sequence stored during assembly (reference assembly sequence) is identical to the assembly sequence collected in real time from the assembled battery module (real-time assembly sequence) can ensure that the battery cell in the battery module is reinspected from the perspectives of consistency, process integrity, and assembly sequence of the batteries in the battery module, thereby ensuring that each battery module is qualified, and preventing discrepancies between the actual battery module and the records due to equipment errors and human intervention.

In some embodiments, the battery module assembly method according to the embodiments of the present invention may further include the following steps 205 to 207.

In step 205, a battery module identifier application request transmitted by the battery module assembly device is received, where the battery module identifier application request carries process data of the battery module and the identifier of the at least one second battery cell in the battery module, and the process data is data generated during an entire assembly process of the battery module.

In this step, the battery module identifier application request is used to apply for an identifier for the assembled battery module, so as to bind the assembled battery module to the applied battery module identifier, where the applied battery module identifier is used as the unique identifier of the assembled battery module.

In step 206, an integrity inspection is performed on the battery module based on the process data and the identifier of the at least one second battery cell.

In this step, the process data may refer to data generated under a plurality of assembly operations during the entire assembly process of the battery module. Performing integrity inspection on the battery module is intended to inspect the battery module from the perspectives of integrity of process data and whether the assembly has been performed.

In a feasible implementation, the specific implementation of step 206 may be: determining an assembly state of the at least one second battery cell based on the identifier of the at least one second battery cell; and in the case that the process data satisfies process conditions and the assembly state of the at least one second battery cell is unassembled, determining that the battery module passes the integrity inspection. Otherwise, in the case that the process data does not satisfy the process conditions, or the assembly state of the at least one second battery cell is assembled, it is determined that the battery module fails to pass the integrity inspection.

In this step, the assembly state represents whether the corresponding battery cell has been assembled, or whether it is in a production inventory state. The process conditions are used to measure the integrity of the process data of the battery cell. The process conditions may mean that the process data is correct and without omission. The assembly state of the at least one second battery cell being unassembled is intended to ensure a one-to-one correspondence relationship between the battery cell and the battery module, thereby preventing battery misassembly.

In a feasible implementation, the process data satisfying the process conditions includes: a first equipment operation in the process data matching a preset second equipment operation; and data records generated under each of the first assembly operations being complete.

The first equipment operation refers to an assembly operation in the process data, and the second equipment operation refers to a preset assembly operation of the battery module. The first equipment operation matches the preset second equipment operation means that the first equipment operation is identical to the second equipment operation. The data records generated under each of the first assembly operations being complete means that data generated under each equipment operation has no omission or anomaly.

For example, the first equipment operation includes a cleaning operation, a gluing operation, and a shaping operation. In this case, the specific implementation of determining whether the data generated under each equipment operation is completely recorded may be: determining whether data such as cleaning power, cleaning rate, and cleaning effect under the cleaning operation is completely recorded, determining whether data such as glue amount and glue material under the gluing operation is completely recorded, and determining whether data such as pressure and dimensions under the shaping operation is completely recorded.

During the implementation, after the applied battery module identifier is bound to the assembled battery module, the assembly states of the battery cells in the battery module are all set to assembled, so as to prevent mismatches between the battery cells and the battery module and to prevent a single battery cell from being associated with a plurality of battery modules.

In step 207, in the case that the battery module passes the integrity inspection, a response message, indicating that the battery module can be bound to a corresponding battery module identifier, is transmitted to the battery module assembly device.

In this step, the response message may indicate that the battery module is currently bound to the corresponding battery module identifier in the control device, and the binding operation can be performed between the battery module and the corresponding battery module identifier in a real scenario. In a feasible implementation, the control device transmits a response message, indicating that the battery module can be bound to a corresponding battery module identifier, to the battery module assembly device; and after receiving the response message, the control device may perform a binding operation between the battery module and the corresponding battery module identifier, so as to implement on-site binding on the production line.

It can be understood that by performing integrity inspection on the information carried in the battery module identifier application request through the control device, the data accuracy and traceability can be ensured, thereby facilitating subsequent retrieval and review.

The embodiments of the present invention provide a battery module assembly method, which can be applied to a battery module assembly device. Referring to FIG. 3, the method includes the following steps 301 to 303.

In step 301, during an entire assembly process of at least one battery cell from incoming to assembly into a battery module, data to be inspected is collected a plurality of times.

In a feasible implementation, battery data of multiple stages during the entire assembly process of the battery module may be collected in real time to obtain data to be inspected that is collected a plurality of times.

In step 302, the data to be inspected is transmitted to a control device to enable the control device to perform a plurality of inspections on the at least one battery cell based on the data to be inspected.

In a feasible implementation, each time battery data is collected, the battery data is transmitted as the data to be inspected to the control device for inspection.

In step 303, at least one of results of the plurality of inspections transmitted by the control device is received, and the at least one battery cell is processed based on the at least one of the results of the plurality of inspections, to achieve full-process management of battery module assembly.

In a feasible implementation, whether the battery cell at each stage has an anomaly can be determined based on the inspection result of each stage. If an anomaly exists, the abnormal battery cell can be processed promptly; if no anomaly exists, the next assembly operation can be started. In this way, the accuracy of the battery cell at each stage can be ensured, and the next assembly operation is performed only when the battery cell passes inspection, thereby improving the final qualification rate of battery modules discharged from the port to reach 100%, and thus achieving full-process management and control of battery module assembly.

It can be understood that, during the entire assembly process of the battery module, real-time collection of battery data of multiple stages is performed through the battery module equipment device to obtain data to be inspected of multiple stages; and a plurality of inspections are performed on the battery cell by the control device based on the data to be inspected of multiple stages. Therefore, anomalies in the battery module assembly process can be promptly addressed based on the results of the plurality of inspections, thereby achieving full-process management of battery module assembly. Furthermore, since a plurality of inspections are performed throughout the entire process of battery module assembly, an effective closed loop of data for the entire assembly process of the battery module can be achieved, enabling effective management and control of data of the entire assembly process of the battery module, and solving the problem of mismatch between the battery cells and the battery module caused by anomalies such as battery cell damage, manual intervention, complicated assembly operations, and equipment failures.

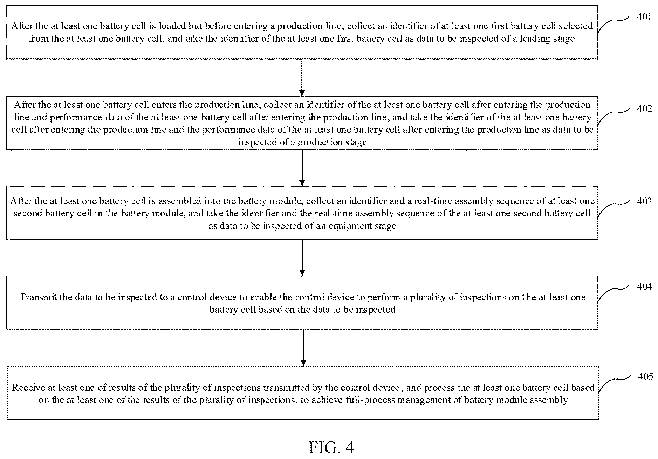

The embodiments of the present invention provide a battery module assembly method, which can be applied to a battery module assembly device. Referring to FIG. 4, the method includes the following steps 401 to 405.

In step 401, after the at least one battery cell is loaded but before entering a production line, an identifier of at least one first battery cell selected from the at least one battery cell is collected, and the identifier of the at least one first battery cell is used as data to be inspected of a loading stage.

In one embodiment, the specific implementation of "collecting an identifier of at least one first battery cell selected from the at least one battery cell" in step 401 may be: selecting at least one first battery cell from the at least one battery cell; and scanning the at least one first battery cell using a first camera to obtain the identifier of the at least one first battery cell.

In this step, the first camera is used to scan the selected incoming battery cell (the at least one first battery cell) to obtain the identifier of the at least one first battery cell. Illustratively, the first camera may be a gripper camera of a material loading robot in the battery module assembly device.

In a feasible implementation, the graphic code of the at least one first battery cell can be scanned by the gripper camera of the material loading robot to obtain the identifier of the at least one first battery cell. In this way, the identifier of the at least one first battery cell can be used as the data to be inspected of the loading stage so as to implement sampling inspection on the incoming battery cell. The graphic code of the battery cell is also referred to as a battery code. The graphic code of any battery cell may refer to a graphic code attached to the battery cell, or a two-dimensional code, etc.

It can be understood that scanning a graphic code of the at least one selected first battery cell can improve the inspection rate of the incoming battery cell.

In step 402, after the at least one battery cell enters the production line, an identifier of the at least one battery cell after entering the production line and performance data of the at least one battery cell after entering the production line are collected, and the identifier of the at least one battery cell after entering the production line and the performance data of the at least one battery cell after entering the production line are used as data to be inspected of a production stage.

In a feasible implementation, the temperature and the voltage of the at least one battery cell after entering the production line may be collected, and the temperature and the voltage of the at least one battery cell after entering the production line may be used as the performance data; the at least one battery cell after entering the production line may be scanned to obtain the identifier of the at least one battery cell after entering the production line; and then, the identifier and the performance data of the at least one battery cell after entering the production line are used as the data to be inspected of the production stage.

In step 403, after the at least one battery cell is assembled into the battery module, an identifier and a real-time assembly sequence of at least one second battery cell in the battery module are collected, and the identifier and the real-time assembly sequence of the at least one second battery cell are used as data to be inspected of an equipment stage.

In a feasible implementation, during assembly, the real-time assembly sequence of the battery cell may be stored in the battery module assembly device through manual processing; at least one second battery cell may be scanned to obtain the identifier of the at least one second battery cell; and then the identifier and the real-time assembly sequence of the at least one second battery cell are used as the data to be inspected of the equipment stage.

In step 404, the data to be inspected is transmitted to a control device to enable the control device to perform a plurality of inspections on the at least one battery cell based on the data to be inspected.

In a feasible implementation, the data to be inspected collected at each stage may be transmitted to the control device to enable the control device to inspect the battery cell based on the data to be inspected of each stage.

In step 405, at least one of results of the plurality of inspections transmitted by the control device is received, and the at least one battery cell is processed based on the at least one of the results of the plurality of inspections, to achieve full-process management of battery module assembly.

In a feasible implementation, in the case that the sampling inspection result indicates that the at least one battery cell has no anomaly, an operation for entering the production line is performed on the at least one battery cell; in the case that the full inspection result indicates that the at least one battery cell has no anomaly, an assembly operation is performed on the at least one battery cell after entering the production line; and in the case that the reinspection result indicates that the at least one battery cell has no anomaly, a battery module identifier application request is transmitted to the control device. In this way, full-process management of battery module assembly is achieved.

Herein, steps 401 to 403 correspond to the aforementioned step 301, step 404 corresponds to the aforementioned step 302, and step 405 corresponds to the aforementioned step 303. During the implementation, reference can be made to the specific implementations of the aforementioned steps.

It can be understood that collecting the data to be inspected of the loading stage is intended to perform sampling inspection on the incoming battery cell at the loading stage; collecting the data to be inspected of the production stage is intended to perform full inspection on the battery cell on the production line at the production stage; and collecting the data to be inspected of the assembly stage is intended to perform reinspection on the battery cell in the assembled battery module at the assembly stage. In this way, when an anomaly occurs at any stage, the anomaly can be immediately handled, while also achieving full-process management and control of the entire assembly process of the battery module, thereby improving the effectiveness of battery module assembly and increasing the final qualification rate of battery modules discharged from the port.

In some embodiments, the specific implementation of "collecting an identifier of the at least one battery cell after entering the production line and performance data of the at least one battery cell after entering the production line" in step 402 may include the following steps 4021 to 4025.

In step 4021, the at least one battery cell after entering the production line is scanned using a second camera to obtain the identifier of the at least one battery cell after entering the production line.

In this step, the second camera is used to scan the battery cell on the production line (at least one battery cell after entering the production line) to obtain the identifier of the at least one battery cell after entering the production line. It should be noted that the first camera and the second camera may be the same or different, which is not limited in the embodiments of the present invention. Illustratively, the second camera may be a verification station camera in the battery module assembly device.

In a feasible implementation, the graphic code of the at least one battery cell after entering the production line may be scanned by a verification station camera to obtain the identifier of the at least one battery cell after entering the production line.

In step 4022, a voltage of the at least one battery cell after entering the production line is detected to obtain the voltage of the at least one battery cell after entering the production line.

In a feasible implementation, the voltage of the at least one battery cell after entering the production line may be detected by a voltage detector to obtain the voltage of the at least one battery cell after entering the production line. The voltage detector may be an open circuit voltage (OCV) detector.

In step 4023, a temperature of the at least one battery cell after entering the production line is detected using two types of temperature detection methods to obtain a first temperature and a second temperature.

In this step, since different points on the surface of the battery cell may have different temperatures, two types of temperature detection methods are required to detect the temperature of the battery cell on the production line so as to avoid temperature differences. The two types of temperature detection methods may include a contact temperature detection method and a non-contact temperature detection method. Illustratively, the contact temperature detection method may employ a contact thermometer, and the non-contact temperature detection method may employ an infrared detector.

In a feasible implementation, a contact thermometer may be employed to detect the temperature of the battery cell on the production line (at least one battery cell after entering the production line), thereby obtaining the first temperature; and an infrared detector may be employed to detect the temperature of the battery cell on the production line, thereby obtaining the second temperature.

In step 4024, the temperature of the at least one battery cell after entering the production line is determined based on the first temperature, the second temperature, and a temperature threshold.

In this step, the temperature threshold is used to evaluate whether the temperature difference of the battery cell on the production line falls within an acceptable range. The temperature threshold may be preset based on actual service scenarios. For example, the temperature threshold may be set to 0.5 °C.

In a feasible implementation, the specific implementation of step 4024 may be: determining whether a temperature difference between the first temperature and the second temperature satisfies the temperature threshold; and in the case that the temperature difference satisfies the temperature threshold, determining the temperature of the at least one battery cell after entering the production line based on the first temperature and the second temperature.

For example, in the case that the temperature difference between the first temperature and the second temperature satisfies the temperature threshold, either of the first temperature and the second temperature can be used as the temperature of the at least one battery cell after entering the production line; or, the mean value of the first temperature and the second temperature can also be used as the temperature of the at least one battery cell after entering the production line. If both the first temperature and the second temperature are used as the temperature of the at least one battery cell after entering the production line, the temperature of the at least one battery cell after entering the production line may be a temperature range.

In step 4025, the voltage and the temperature of the at least one battery cell after entering the production line are used as the performance data of the at least one battery cell after entering the production line.

It can be understood that since temperature is greatly affected by external environment, by detecting the temperature of the battery cell on the production line using two different temperature measurement methods, actual temperature differences and measurement deviations can be avoided, thereby eliminating interference from the external environment. By taking the temperature and the voltage of the battery cell as the performance data of the battery cell, the battery on the production line can be inspected from the perspective of the performance of the battery itself, thereby ensuring the quality of the assembled battery module.

In some embodiments, "collecting an identifier and a real-time assembly sequence of at least one second battery cell in the battery module" in step 403 can be implemented by following steps 4031 and 4032.

In step 4031, a real-time assembly sequence of the battery cell in the battery module is determined.

In step 4032, the at least one second battery cell in the battery module is scanned using a third camera based on the real-time assembly sequence to obtain the identifier of the at least one second battery cell.

In this step, the third camera is used to scan the battery cell (at least one second battery cell) in the assembled battery module to obtain the identifier of the at least one second battery cell. It should be noted that the third camera, the first camera, and the second camera may be the same camera or different cameras, which is not limited in the embodiments of the present invention. Illustratively, the third camera may be a battery module station camera in the battery module assembly device.

In a feasible implementation, the at least one second battery cell in the battery module may be scanned sequentially by a battery module station camera based on the real-time assembly sequence to obtain ordered identifiers of the at least one second battery cell.

It can be understood that by taking the identifier and the real-time assembly sequence of the battery cell in the battery module as real-time battery module data, the battery cell in the battery module can be inspected from the perspectives of consistency, process integrity, and assembly sequence of the battery cells in the battery module to ensure that each battery module is qualified, and to prevent discrepancies between the actual battery module and the records due to equipment errors and human intervention.

In some embodiments, in the case that the results of the plurality of inspections include a sampling inspection result, a full inspection result, and a reinspection result, "processing the at least one battery cell based on the at least one of the results of the plurality of inspections" in step 405 may be implemented by following steps 4051 to 4055.

In step 4051, in the case that the sampling inspection result, the full inspection result, and the reinspection result all indicate that the at least one battery cell has no anomaly, a battery module identifier application request is transmitted to the control device, where the battery module identifier application request is used to bind the battery module to a corresponding battery module identifier.

In a feasible implementation, the battery module identifier application request can be transmitted to the battery module assembly device through a communication channel between the control device and the battery module assembly device, so as to bind the battery module to the corresponding battery module identifier.

In step 4052, a response message transmitted by the control device in response to the battery module identifier application request is received.
In step 4053, in the case that the response message indicates that the battery module can be bound to the corresponding battery module identifier, the battery module is bound to the corresponding battery module identifier, and the battery module is allowed to be discharged from a discharge port of the battery module assembly device.

It can be understood that an actual binding operation is performed in a real scenario only in the case that the response message transmitted by the control device in response to the battery module identifier application request indicates that the battery module can be bound to the corresponding battery module identifier, such that the data integrity of the battery module and a one-to-one correspondence relationship between the battery module and the battery module identifier can be ensured.

In step 4054, in the case that the at least one of the results of the plurality of inspections indicates that the at least one battery cell has an anomaly or the response message indicates that the battery module fails to be bound to the corresponding battery module identifier, an abnormal battery cell is determined.

In step 4055, the abnormal battery cell is allowed to be discharged from an anomaly output port of the battery module assembly device.

It can be understood that in the case that at least one of the results of the plurality of inspections transmitted by the control device indicates that at least one battery cell has an anomaly, or the response message in response to the battery module identifier application request indicates that the battery module fails to be bound to the corresponding battery module identifier, abnormal battery cells will be identified and discharged from the current production line.

The embodiments of the present invention provide a battery module assembly system. The system includes a control device and a battery module assembly device.

The battery module assembly device is configured to, during an entire assembly process of at least one battery cell from incoming to assembly into a battery module, collect data to be inspected a plurality of times; and transmit the data to be inspected to the control device, to enable the control device to perform a plurality of inspections on the at least one battery cell based on the data to be inspected.

The control device is configured to perform a plurality of inspections on the at least one battery cell based on the data to be inspected transmitted by the battery module assembly device; and transmit at least one of results of the plurality of inspections to the battery module assembly device.

The battery module assembly device is configured to receive at least one of results of the plurality of inspections transmitted by the control device, and process the at least one battery cell based on the at least one of the results of the plurality of inspections, to achieve full-process management of battery module assembly.

It can be understood that, during the entire assembly process of the battery module, real-time collection of battery data of multiple stages is performed through the battery module equipment device to obtain data to be inspected of multiple stages; and a plurality of inspections are performed on the battery cell by the control device based on the data to be inspected of multiple stages. Therefore, anomalies in the battery module assembly process can be promptly addressed based on the results of the plurality of inspections, thereby achieving full-process management of battery module assembly. Furthermore, since a plurality of inspections are performed throughout the entire process of battery module assembly, an effective closed loop of data for the entire assembly process of the battery module can be achieved, enabling effective management and control of data of the entire assembly process of the battery module, and solving the problem of mismatch between the battery cells and the battery module caused by anomalies such as battery cell damage, manual intervention, complicated assembly operations, and equipment failures.

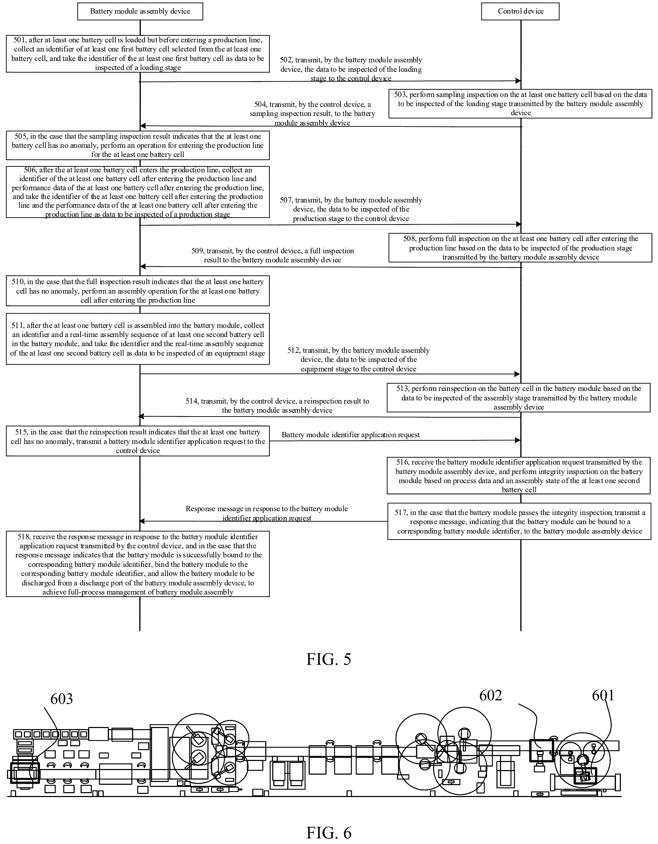

The embodiments of the present invention provide a schematic flowchart of interaction of a battery module assembly system. As shown in FIG. 5, the following steps 501 to 518 may be included.

In step 501, after the at least one battery cell is loaded but before entering a production line, the battery module assembly device collects an identifier of at least one first battery cell selected from the at least one battery cell, and takes the identifier of the at least one first battery cell as data to be inspected of a loading stage.

In step 502, the battery module assembly device transmits the data to be inspected of the loading stage to the control device.

In step 503, the control device performs sampling inspection on the at least one battery cell based on the data to be inspected of the loading stage transmitted by the battery module assembly device.

In step 504, the control device transmits a sampling inspection result to the battery module assembly device.

In step 505, the battery module assembly device receives the sampling inspection result transmitted by the control device, and in the case that the sampling inspection result indicates that the at least one battery cell has no anomaly, performs an operation for entering the production line for the at least one battery cell.

In step 506, after the at least one battery cell enters the production line, the battery module assembly device collects an identifier of the at least one battery cell after entering the production line and performance data of the at least one battery cell after entering the production line, and takes the identifier of the at least one battery cell after entering the production line and the performance data of the at least one battery cell after entering the production line as data to be inspected of a production stage.

In step 507, the battery module assembly device transmits the data to be inspected of the production stage to the control device.

In step 508, the control device performs full inspection on the at least one battery cell after entering the production line based on the data to be inspected of the production stage transmitted by the battery module assembly device.

In step 509, the control device transmits a full inspection result to the battery module assembly device.

In step 510, the battery module assembly device receives the full inspection result transmitted by the control device, and in the case that the full inspection result indicates that the at least one battery cell has no anomaly, performs an assembly operation for the at least one battery cell after entering the production line.

In step 511, after the at least one battery cell is assembled into the battery module, the battery module assembly device collects an identifier and a real-time assembly sequence of at least one second battery cell in the battery module, and takes the identifier and the real-time assembly sequence of the at least one second battery cell as data to be inspected of an equipment stage.

In step 512, the battery module assembly device transmits the data to be inspected of the equipment stage to the control device.

In step 513, the control device performs reinspection on the battery cell in the battery module based on the data to be inspected of the assembly stage transmitted by the battery module assembly device.

In step 514, the control device transmits a reinspection result to the battery module assembly device.

In step 515, the battery module assembly device receives the reinspection result transmitted by the control device, and in the case that the reinspection result indicates that the at least one battery cell has no anomaly, transmits a battery module identifier application request to the control device.

In step 516, the control device receives the battery module identifier application request transmitted by the battery module assembly device, and performs integrity inspection on the battery module based on process data and an assembly state of the at least one second battery cell.

In step 517, in the case that the battery module passes the integrity inspection, the control device transmits a response message, indicating that the battery module can be bound to a corresponding battery module identifier, to the battery module assembly device.

In step 518, the battery module assembly device receives the response message in response to the battery module identifier application request transmitted by the control device, and in the case that the response message indicates that the battery module is successfully bound to the corresponding battery module identifier, binds the battery module to the corresponding battery module identifier, and allows the battery module to be discharged from a discharge port of the battery module assembly device, to achieve full-process management of battery module assembly.

The application of the battery module assembly method according to the embodiments of the present invention in actual scenarios is described below.

The core inventive concept of the embodiments of the present invention may be: employing a three-stage verification and inspection approach to achieve a closed-loop inspection and review. The technical effect achieved by the core inventive concept is that: the data of the three stages of incoming, production, and assembly of batteries are all subjected to inspection, thereby achieving full-process management and control over battery module assembly and preventing defective batteries from being assembled and discharged.

The embodiments of the present invention provide a battery module assembly system. As shown in FIG. 6, the battery module assembly system according to the embodiments of the present invention mainly performs inspection on three relatively critical stages during the entire assembly process of the battery module. In the incoming battery sampling inspection stage (the aforementioned incoming stage), the battery module assembly device may refer to an incoming battery sampling inspection device 601; in the full inspection stage for batteries on the production line (the aforementioned production stage), the battery module assembly device may refer to a full inspection device 602 for batteries on the production line; and in the battery module reinspection stage (the aforementioned assembly stage), the battery module assembly device may refer to a battery module reinspection device 603. The programmable logic controllers (PLCs) corresponding to the incoming battery sampling inspection stage and the full inspection stage for batteries on the production line may be the same, while the PLC corresponding to the battery module reinspection stage is different from the PLCs corresponding to the first two stages. The inspection processes of the three stages are described below:
I. Incoming battery sampling inspection stage (corresponding to incoming battery sampling inspection device 601):

After battery cells on the production line reach the incoming workstation through an incoming material pallet, but before being picked up by a loading robot, the incoming batteries are subjected to sampling inspection;
two batteries at the head and tail of each column on the incoming material pallet are taken, the gripper camera of the loading robot scans the selected batteries (at least one first battery cell) to obtain battery codes (identifiers of the at least one first battery cell) of the loaded batteries, and the battery codes are then transmitted to the PLC in the battery module assembly device;
the PLC receives the battery codes of the loaded batteries and forwards them to the line host computer, and the line host computer, in combination with the current production work order (production work order battery module code), uploads the same to the manufacturing execution system (MES) in the control device to request inspection;
the MES queries battery data such as production batches and inventory in/out records of the loaded batteries based on the battery codes of the loaded batteries; inspects the battery data based on the production work order, including whether the production batches and the inventory in/out records of the batteries match the production work order, and transmits a sampling inspection result to the line host computer;
the line host computer forwards the sampling inspection result to the PLC; and
the PLC receives the sampling inspection result, and performs a grouping action based on the sampling inspection result. If the sampling inspection result indicates that the incoming batteries have no anomaly, the operation for entering the production line is normally performed on the batteries; and if the sampling inspection result indicates that the incoming batteries have anomalies, the operation for entering the production line is canceled for the incoming batteries, the loading robot returns to the home position (initial position), and the incoming batteries are entirely removed from the material fetching position, and replaced with new materials.

The main function of this inspection is: to control battery data from the material incoming end, so as to prevent mismatches between a full pallet of materials and the production order caused by errors during warehouse management, logistics distribution, or loading by employee, and to avoid situations in which a large number of battery materials that do not match the work order enter the production line and cause production line shutdown and material clearing.

Full inspection stage for batteries on the production line (corresponding to full inspection device 602 for batteries on the production line):

After the batteries enter the production line, comprehensive verification of the battery data and the battery performance is performed;

the verification station camera scans all the batteries on the production line (at least one battery cell after entering the production line) to obtain battery codes of the batteries on the production line; an OCV detector is used to monitor the voltage of the batteries on the production line; a contact detector and an infrared detector are used to detect the temperatures of the batteries on the production line to obtain two temperatures, and the two temperatures are compared with each other to avoid deviations of the measurement data;
the PLC forwards the battery codes, voltages, temperatures, and other data (data to be inspected of the production stage) to the line host computer; the line host computer verifies whether the voltages and temperatures of the batteries exceed limits based on the production process in the current production work order; after preliminary screening, the line host computer uploads the battery codes, voltages, temperatures, and other data as well as preliminary screening results to the MES to request inspection and archiving;
the MES performs inspection based on the production work order, including whether the production batches and the inventory in/out records of the batteries match the production work order, and transmits an inspection result to the line host computer;
the line host computer receives the MES inspection result, combines the MES inspection result with the voltage and temperature inspection results, and transmits the MES inspection result and the voltage and temperature inspection results together to the PLC;
the PLC receives the verification information and writes the result of each battery into an RFID separately; and
unqualified batteries are conveyed to an NG discharge station; RFID information of the unqualified batteries is read and when the RFID information indicates that the battery is an NG battery, the NG battery is discharged from the NG discharge port.

The main function of this inspection is: to perform full inspection on the batteries on the production line. In this inspection, in addition to verifying the batch and inventory information of the batteries, the performance indicators of the batteries themselves are also comprehensively inspected to ensure that the batteries entering the production line for assembly are 100% qualified products, thereby preventing other batteries from being mixed in during packaging due to special reasons.

Battery module assembly reinspection stage (corresponding to battery module assembly reinspection device 603):

After the battery assembly is completed, a verification-style inspection on the battery modules is performed;
the battery module scanning station camera scans the battery modules in the station in sequence, sequences the batteries based on the assembly sequence of the battery modules, and transmits battery code data sets to the PLC;
the PLC receives the real-time scanning data of the scanning station and compares it with the battery data transmitted by the device itself (which stores battery information corresponding to the battery module and the assembly sequence of the batteries during the assembly process); if the two sets of data, including the battery codes of the assembled battery modules and the assembly sequence, are consistent, it indicates a pass in the verification; otherwise, the verification is NG;
the NG result of the verification is written into the RFID, and the NG battery module is discharged from the NG discharge port;
when the verification is passed, the battery code information of the battery module is uploaded to the line host computer by the PLC;
the line host computer requests a battery module code from the MES, and transmits it together with the battery codes to the MES to request data assembly and binding;
the MES verifies whether the data corresponding to the uploaded battery codes exists, whether the process data during the battery assembly process is complete, whether the batteries are in the production inventory state, and the like; if the data is complete, the binding to the battery module code is performed and completed and an OK result is transmitted to the line host computer; otherwise, no binding is performed and an NG result is transmitted to the line host computer; for batteries that have been previously disassembled, manual unbinding of records in the MES is required; if unbinding is not performed, the batteries in the battery module may still appear as already assembled; since batteries cannot be repeatedly assembled, this verification is intended to prevent situations where batteries have already been assembled;
the line host computer forwards the MES verification result and the binding result to the PLC; and
the PLC performs corresponding actions based on the verification result: for battery modules with OK verification and binding results, the battery modules are discharged normally according to the production process and the subsequent processes such as boxing are completed; for battery modules with NG verification and binding results, the NG result is written into the RFID, and the NG battery modules are discharged from the NG discharge port.

The main function of this reinspection is: to reverify the batteries that have already been assembled into battery modules before binding of battery module assembly data, so as to ensure consistency as well as accurate and complete process parameters of the batteries during the assembly process of the battery module, thereby providing quality control at the final output stage of the battery module, ensuring that each battery module is qualified, and preventing discrepancies between the actual battery module and the records due to equipment errors and human intervention.

It should be understood that reference throughout the specification to "one embodiment" or "an embodiment" means that particular features, structures, or characteristics related to the embodiment are included in at least one embodiment of the present invention. Thus, "in one embodiment" or "in an embodiment" appearing in various places throughout the specification does not necessarily refer to the same embodiment. Furthermore, these particular features, structures or characteristics may be combined in any suitable manner in one or more embodiments. It should be understood that in various embodiments of the present invention, the numerical order of the steps/processes described above does not imply the sequence of execution. The execution order of the steps/processes should be determined by their functions and internal logic, and should not impose any limitation on the implementation of the embodiments of the present invention. The serial numbers of the embodiments of the present invention are merely for description, and do not represent the superiority or inferiority of the embodiments.

It should be noted that the terms "comprise", "include", or any other variations thereof herein are intended to cover non-exclusive inclusion, such that a process, method, article, or apparatus that includes a list of elements includes not only those elements but may also include other elements not explicitly listed or inherent to such process, method, article, or apparatus. In the absence of further limitations, an element limited by the phrase "comprising a..." does not exclude the presence of additional identical elements in a process, method, article, or apparatus that includes the element.

In the several embodiments provided in the present invention, it should be understood that the disclosed devices and methods may be implemented in other ways. The above-described device embodiments are merely illustrative. For example, the division of the units is only a division based on logical function, and it can be implemented in other ways in actual situations. For example, multiple units or assemblies may be combined or integrated into another system, or some features may be omitted or not executed. In addition, the coupling, direct coupling, or communication connection between each component that is shown or discussed may be indirect coupling or communication connection through some interfaces, devices, or units, and it may be in electrical, mechanical, or other forms.

The units described above as separate parts may or may not be physically separate, and parts displayed as units may or may not be physical units; that is, they may be located in one place or distributed across a plurality of network units. Some or all of the units may be selected based on an actual requirement to achieve the objectives of the solutions of the embodiments.

In addition, all functional units in the embodiments of the present invention may be integrated into one processing unit, or each unit may be used as a separate unit, or two or more units may be integrated into one unit. The above integrated unit may be implemented in a form of hardware, or may be implemented in a form of hardware plus a software functional unit.

The above descriptions are embodiments of the present invention, but the protection scope of the present invention is not limited thereto. Any variations or substitutions that can be easily conceived by those skilled in the art within the technical scope disclosed in the present invention shall be covered by the protection scope of the present invention.

### Industrial Applicability

The embodiments of the present invention provide a battery module assembly method and a battery module assembly system. The battery module assembly method includes: during an entire assembly process of at least one battery cell from incoming to assembly into a battery module, performing a plurality of inspections on the at least one battery cell based on data to be inspected transmitted by a battery module assembly device; and transmitting at least one of results of the plurality of inspections to the battery module assembly device to achieve full-process management of battery module assembly. According to the above solution, anomalies during the assembly process of the battery module can be promptly addressed based on the results of the plurality of inspections, thereby achieving full-process management of battery module assembly.

## Claims

1. A battery module assembly method, applied to a control device, wherein the battery module assembly method comprises:
during an entire assembly process of at least one battery cell from incoming to assembly into a battery module, performing a plurality of inspections on the at least one battery cell based on data to be inspected transmitted by a battery module assembly device; and
transmitting at least one of results of the plurality of inspections to the battery module assembly device to achieve full-process management of battery module assembly.

2. The battery module assembly method according to claim 1, wherein during the entire assembly process of at least one battery cell from incoming to assembly into a battery module, performing the plurality of inspections on the at least one battery cell based on data to be inspected transmitted by a battery module assembly device comprises:
after the at least one battery cell is loaded but before entering a production line, performing a sampling inspection on the at least one battery cell based on data to be inspected of a loading stage transmitted by the battery module assembly device;
after the at least one battery cell enters the production line, performing a full inspection on the at least one battery cell after entering the production line based on data to be inspected of a production stage transmitted by the battery module assembly device; and
after the at least one battery cell is assembled into the battery module, performing a reinspection on the battery cell in the battery module based on data to be inspected of an assembly stage transmitted by the battery module assembly device.

3. The battery module assembly method according to claim 2, wherein the data to be inspected of the loading stage comprises an identifier of at least one first battery cell selected from the at least one battery cell;
performing the sampling inspection on the at least one battery cell based on the data to be inspected of the loading stage transmitted by the battery module assembly device comprises:
receiving the identifier of the at least one first battery cell transmitted by the battery module assembly device;
determining first battery data of the at least one first battery cell based on the identifier of the at least one first battery cell; and
inspecting the at least one first battery cell based on the first battery data and a production work order to implement the sampling inspection on the at least one battery cell.

4. The battery module assembly method according to claim 3, wherein the first battery data comprises a production batch and an inventory in/out record of the at least one first battery cell;
inspecting the at least one first battery cell based on the first battery data and the production work order to implement the sampling inspection on the at least one battery cell comprises:
in a case that the production batch and the inventory in/out record of the at least one first battery cell match the production work order, determining a sampling inspection result indicating that the at least one first battery cell has no anomaly; and
in a case that the production batch and the inventory in/out record of the at least one first battery cell do not match the production work order, determining a sampling inspection result indicating that the at least one first battery cell has an anomaly.

5. The battery module assembly method according to any one of claims 2 to 4, wherein the data to be inspected of the production stage comprises the identifier of the at least one battery cell after entering the production line and performance data of the at least one battery cell after entering the production line;
performing the full inspection on the at least one battery cell after entering the production line based on the data to be inspected of the production stage transmitted by the battery module assembly device comprises:
receiving the identifier of the at least one battery cell after entering the production line and the performance data of the at least one battery cell after entering the production line transmitted by the battery module assembly device;
determining second battery data of the at least one battery cell after entering the production line based on the identifier of the at least one battery cell after entering the production line;
performing a first full inspection on the at least one battery cell after entering the production line based on the second battery data and the production work order; and
performing a second full inspection on the at least one battery cell after entering the production line based on the performance data and preset performance of the at least one battery cell after entering the production line.

6. The battery module assembly method according to claim 5, wherein the performance data comprises a voltage of the at least one battery cell after entering the production line and a temperature of the at least one battery cell after entering the production line, and the preset performance comprises an association relationship between the voltage and the temperature of the battery cell;
performing the second full inspection on the at least one battery cell after entering the production line based on the performance data and the preset performance of the at least one battery cell after entering the production line comprises:
in a case that the voltage of the at least one battery cell after entering the production line and the temperature of the at least one battery cell after entering the production line both satisfy the association relationship, determining a second full inspection result indicating that the at least one battery cell after entering the production line has no anomaly; and
in a case that at least one of the voltage of the at least one battery cell after entering the production line and the voltage temperature of the at least one battery cell after entering the production line does not satisfy the association relationship, determining a second full inspection result indicating that the at least one battery cell after entering the production line has an anomaly.

7. The battery module assembly method according to any one of claims 2 to 6, wherein the data to be inspected of the assembly stage comprises an identifier and a real-time assembly sequence of at least one second battery cell in the battery module;
performing the reinspection on the battery cell in the battery module based on the data to be inspected of the assembly stage transmitted by the battery module assembly device comprises:
receiving the identifier and the real-time assembly sequence of the at least one second battery cell transmitted by the battery module assembly device;
determining third battery data of the at least one second battery cell based on the identifier of the at least one second battery cell; and
performing a reinspection on the battery cell in the battery module based on the third battery data, the real-time assembly sequence, and battery module assembly data, wherein the battery module assembly data is stored during assembly.

8. The battery module assembly method according to claim 7, wherein the battery module assembly data comprises reference battery data and a reference assembly sequence;
performing the reinspection on the battery cell in the battery module based on the third battery data, the real-time assembly sequence, and the battery module assembly data comprises:
in a case that the third battery data matches the reference battery data and the real-time assembly sequence matches the reference assembly sequence, determining a reinspection result indicating that the battery module has no anomaly; and
in a case that the third battery data does not match the reference battery data or the real-time assembly sequence does not match the reference assembly sequence, determining a reinspection result indicating that the battery module has an anomaly.

9. The battery module assembly method according to any one of claims 1 to 8, wherein the battery module assembly method further comprises:
receiving a battery module identifier application request transmitted by the battery module assembly device, wherein the battery module identifier application request carries process data of the battery module and the identifier of the at least one second battery cell in the battery module, and the process data is data generated during an entire assembly process of the battery module;
performing an integrity inspection on the battery module based on the process data and the identifier of the at least one second battery cell; and
in a case that the battery module passes the integrity inspection, transmitting a response message, indicating that the battery module can be bound to a corresponding battery module identifier, to the battery module assembly device.

10. The battery module assembly method according to claim 9, wherein performing the integrity inspection on the battery module based on the process data and the identifier of the at least one second battery cell comprises:
determining an assembly state of the at least one second battery cell based on the identifier of the at least one second battery cell; and
in a case that the process data satisfies process conditions and the assembly state of the at least one second battery cell is unassembled, determining that the battery module passes the integrity inspection.

11. The battery module assembly method according to claim 10, wherein the process data satisfying the process conditions comprises:
a first equipment operation in the process data matching a preset second equipment operation; and
data records generated under each of the first assembly operations being complete.

12. A battery module assembly method, applied to a battery module assembly device, wherein the battery module assembly method comprises:
during an entire assembly process of at least one battery cell from incoming to assembly into a battery module, collecting data to be inspected a plurality of times;
transmitting the data to be inspected to a control device to enable the control device to perform a plurality of inspections on the at least one battery cell based on the data to be inspected; and
receiving at least one of results of the plurality of inspections transmitted by the control device, and processing the at least one battery cell based on the at least one of the results of the plurality of inspections, to achieve full-process management of battery module assembly.

13. The battery module assembly method according to claim 12, wherein during the entire assembly process of at least one battery cell from incoming to assembly into a battery module, collecting the data to be inspected a plurality of times comprises:
after the at least one battery cell is loaded but before entering a production line, collecting an identifier of at least one first battery cell selected from the at least one battery cell, and taking the identifier of the at least one first battery cell as data to be inspected of a loading stage;
after the at least one battery cell enters the production line, collecting an identifier of the at least one battery cell after entering the production line and performance data of the at least one battery cell after entering the production line, and taking the identifier of the at least one battery cell after entering the production line and the performance data of the at least one battery cell after entering the production line as data to be inspected of a production stage; and
after the at least one battery cell is assembled into the battery module, collecting an identifier and a real-time assembly sequence of at least one second battery cell in the battery module, and taking the identifier and the real-time assembly sequence of the at least one second battery cell as data to be inspected of an equipment stage.

14. The battery module assembly method according to claim 13, wherein collecting the identifier of at least one first battery cell selected from the at least one battery cell comprises:
selecting at least one first battery cell from the at least one battery cell; and
scanning the at least one first battery cell using a first camera to obtain the identifier of the at least one first battery cell.

15. The battery module assembly method according to claim 13 or 14, wherein collecting the identifier of the at least one battery cell after entering the production line and the performance data of the at least one battery cell after entering the production line comprises:
scanning the at least one battery cell after entering the production line using a second camera to obtain the identifier of the at least one battery cell after entering the production line;
detecting a voltage of the at least one battery cell after entering the production line to obtain the voltage of the at least one battery cell after entering the production line;
detecting a temperature of the at least one battery cell after entering the production line using two types of temperature detection methods to obtain a first temperature and a second temperature;
determining the temperature of the at least one battery cell after entering the production line based on the first temperature, the second temperature, and a temperature threshold; and
taking the voltage of the at least one battery cell after entering the production line and the temperature of the at least one battery cell after entering the production line as the performance data of the at least one battery cell after entering the production line.

16. The battery module assembly method according to claim 15, wherein determining the temperature of the at least one battery cell after entering the production line based on the first temperature, the second temperature, and the temperature threshold comprises:
determining whether a temperature difference between the first temperature and the second temperature satisfies the temperature threshold; and
in a case that the temperature difference satisfies the temperature threshold, determining the temperature of the at least one battery cell after entering the production line based on the first temperature and the second temperature.

17. The battery module assembly method according to any one of claims 13 to 16, wherein collecting the identifier and the real-time assembly sequence of at least one second battery cell in the battery module comprises:
determining a real-time assembly sequence of the battery cell in the battery module; and
scanning the at least one second battery cell in the battery module using a third camera based on the real-time assembly sequence to obtain the identifier of the at least one second battery cell.

18. The battery module assembly method according to any one of claims 12 to 17, wherein the results of the plurality of inspections comprise a sampling inspection result, a full inspection result, and a reinspection result;
processing the at least one battery cell based on the at least one of the results of the plurality of inspections to achieve full-process management of battery module assembly comprises:
in a case that the sampling inspection result, the full inspection result, and the reinspection result all indicate that the at least one battery cell has no anomaly, transmitting a battery module identifier application request to the control device, wherein the battery module identifier application request is used to bind the battery module to a corresponding battery module identifier;
receiving a response message transmitted by the control device in response to the battery module identifier application request; and
in a case that the response message indicates that the battery module can be bound to the corresponding battery module identifier, binding the battery module to the corresponding battery module identifier, and allowing the battery module to be discharged from a discharge port of the battery module assembly device.

19. The battery module assembly method according to any one of claims 12 to 18, wherein the battery module assembly method further comprises:
in a case that the at least one of the results of the plurality of inspections indicates that the at least one battery cell has an anomaly or the response message indicates that the battery module fails to be bound to the corresponding battery module identifier, determining an abnormal battery cell; and
allowing the abnormal battery cell to be discharged from an anomaly output port of the battery module assembly device.

20. A battery module assembly system, wherein the system comprises a control device and a battery module assembly device;
the battery module assembly device is configured to, during an entire assembly process of at least one battery cell from incoming to assembly into a battery module, collect data to be inspected a plurality of times; and transmit the data to be inspected to the control device, to enable the control device to perform a plurality of inspections on the at least one battery cell based on the data to be inspected;
the control device is configured to perform a plurality of inspections on the at least one battery cell based on the data to be inspected transmitted by the battery module assembly device; and transmit at least one of results of the plurality of inspections to the battery module assembly device; and
the battery module assembly device is configured to receive at least one of results of the plurality of inspections transmitted by the control device, and process the at least one battery cell based on the at least one of the results of the plurality of inspections, to achieve full-process management of battery module assembly.
